# EUROPÄISCHE PATENTANMELDUNG

(11) **EP 3 184 884 A1**
(43) Veröffentlichungstag der Anmeldung: **28.06.2017**
(21) Anmeldenummer: 16205260.9
(22) Anmeldetag: 20.12.2016
(51) Int. Cl.: F21S 8/10, G02B 26/08, H05B 33/08, F21Y 115/30

(54) **VERFAHREN ZUR STEUERUNG EINES KRAFTFAHRZEUGSCHEINWERFERS UND KRAFTFAHRZEUGSCHEINWERFER**

(30) Priorität: 22.12.2015 AT 510922015
(71) Anmelder: ZKW Group GmbH, 3250 Wieselburg (AT)
(72) Erfinder: Mitterlehner, Thomas, 3240 Mank (AT); Koller, Jan, 1120 Wien (AT)
(74) Vertreter: Patentanwaltskanzlei Matschnig & Forsthuber OG

(57) **Zusammenfassung**

Bei einem Verfahren zur Steuerung eines Kraftfahrzeugscheinwerfers, der Kraftfahrzeugscheinwerfer mindestens umfassend eine Laserdiode (1) und ein der Laserdiode (1) zugeordnetes Lichtkonversionselement (8), wobei unterschiedlichen Bereichen des Lichtbilds (11') entsprechende Bereiche des Lichtkonversionselements (8) von einem Lichtstrahl (2) der Laserdiode (1) periodisch und mit unterschiedlicher Intensität beleuchtbar sind, wird die Beleuchtungsintensität in den den unterschiedlichen Bereichen des Lichtbilds (11') entsprechenden Bereichen des Lichtkonversionselements (8) gleichzeitig sowohl durch die relative Beleuchtungsdauer der unterschiedlichen Bereiche als auch durch unterschiedliche Lichtstärken der Laserdiode (1) in den den unterschiedlichen Bereichen des Lichtbilds (11') entsprechenden Bereichen des Lichtkonversionselements (8) eingestellt. Der erfindungsgemäße Kraftfahrzeugscheinwerfer verfügt über eine Recheneinheit (4) zur Durchführung des erfindungsgemäßen Verfahrens.

## Beschreibung

Die Erfindung betrifft ein Verfahren zur Steuerung eines Kraftfahrzeugscheinwerfers, der Kraftfahrzeugscheinwerfer mindestens umfassend eine Laserdiode und ein der Laserdiode zugeordnetes Lichtkonversionselement, wobei unterschiedlichen Bereichen des Lichtbilds entsprechende Bereiche des Lichtkonversionselements von einem Lichtstrahl der Laserdiode periodisch und mit unterschiedlicher Intensität beleuchtbar sind. Weiters betrifft die Erfindung einen Kraftfahrzeugscheinwerfer mit mindestens einer hinsichtlich ihrer Lichtstärke einstellbaren Laserdiode, deren Laserstrahl scannend auf ein Lichtkonversionselement lenkbar ist, um an diesem ein Leuchtbild zu erzeugen, welches über ein Abbildungssystem als Lichtbild auf die Fahrbahn projiziert wird, und ein Umlenkspiegel des Lichtscanners entsprechend festgelegter Steuerkennlinien in zumindest einer Koordinatenrichtung verschwenkbar ist, sowie mit einer Laseransteuerung und einer dieser zugeordneten Recheneinheit.

Im Stand der Technik sind verschiedene Arten von Fahrzeugscheinwerfern bekannt, wobei in den letzten Jahren überwiegend Scheinwerfer mit Entladungslampen und Halogen-Lichtquellen verwendet wurden. Aus Energiespargründen und um den Platzbedarf von Fahrzeugscheinwerfern weiter zu verringern, wird zunehmend der Einsatz von Laserdioden wie Halbleiterlasern erprobt, da diese diesbezüglich von Vorteil sind. Um das Laserlicht für einen Fahrzeugscheinwerfer nutzbar zu machen, wird dabei mit einer Laserdiode ein Lichtkonversionselement, ein sogenannter Phosphor-Konverter, bestrahlt, der dadurch zur Abstrahlung von sichtbarem Licht angeregt wird. Der Phosphor-Konverter kann hierbei lichtundurchlässig sein, in welchem Fall das Laserlicht auf die Abstrahlseite des Phosphor-Konverters gelenkt wird. Alternativ kann das Lichtkonversionselement vom transmissiven Typ sein, bei welchem der Laserstrahl auf die Rückseite des Phosphor-Konverters gelenkt und auf der anderen Seite, der Abstrahlseite, als konvertiertes Licht abgestrahlt wird.

Bei sogenannten statischen Systemen wird der Laserstrahl unbeweglich auf den Phosphor-Konverter gerichtet. Demgegenüber werden bei den sogenannten dynamischen System der Laserstrahl bzw. die Laserstrahlen, die zur Anregung des Phosphor-Konverters verwendet werden, mit Hilfe von oszillierenden Spiegeln über den Phosphor-Konverter bewegt, sodass für das Auge ein Lichtbild entsteht, welches der äußeren Form des Phosphor-Konverters bzw. der durch den Laserstrahl beleuchteten Bereiche des Lichtkonversionselements entspricht. Der Laserstrahl überstreicht somit das Lichtkonversionselement, welches im aktuell bestrahlten Bereich Licht im sichtbaren Bereich abstrahlt, wobei aufgrund der relativ hohen Abtastgeschwindigkeit des Laserstrahls das menschliche Auge ein kontinuierliches Leuchten wahrnimmt und kein Flimmern oder Flackern erkennbar ist. Das Licht des Lichtkonversionselements wird durch Reflektoren und/oder Linsensysteme vor das Fahrzeug abgestrahlt. Dadurch können bestimmte Lichtfunktionen bzw. präzise Hell-Dunkel-Grenzen der Lichtfunktionen wie beispielsweise Fernlicht, Abblendlicht und dergleichen erzielt werden.

Zur Realisierung von komplexen Lichtbildern und insbesondere zur Realisierung von dynamischen Lichtfunktionen wie bspw. adaptivem Fernlicht, wird das Lichtbild aus einer Vielzahl von unterschiedlichen diskreten Bereichen, sogenannten Pixeln aufgebaut, in welchen unterschiedliche Beleuchtungsintensitäten realisierbar sind. Die unterschiedlichen Beleuchtungsintensitäten resultieren aus unterschiedlich intensiver Beleuchtung bzw. Bestrahlung des Lichtkonversionselements in den den Pixeln des Lichtbilds entsprechenden, unterschiedlichen Bereichen des Lichtkonversionselements, den Pixeln des Lichtkonversionselements, wobei die genannten Reflektoren und/oder Linsensysteme dazu dienen, die unterschiedlichen diskreten Bereiche des Lichtkonversionselements entsprechend scharf im Bereich vor dem Fahrzeug abzubilden.

Um unterschiedliche Beleuchtungsintensitäten im Lichtkonversionselement zu erzielen, stehen prinzipiell zwei Möglichkeiten zur Verfügung. Zum einen kann abhängig von dem Pixel, welches aufgrund der aktuellen Position des oszillierenden Umlenkspiegels gerade mit dem Licht der Laserdiode bestrahlt wird bzw. bestrahlbar ist, die Lichtstärke der Laserdiode unterschiedlich eingestellt werden. Bei dieser Methode sind in der Regel nur einige wenige Stufen der Lichtstärke der Laserdiode steuerungstechnisch vorgesehen. Beispielsweise kann die Laserdiode anhängig von ihrer jeweiligen Position mit 0%, 50% oder 100% der maximalen Lichtstärke der Laserdiode betrieben werden. Zumeist ist jedoch eine wesentlich höhere Zahl unterschiedlicher Helligkeitsstufen im Lichtbild vonnöten, um den Anforderungen an moderne Kraftfahrzeugtechnik gerecht zu werden. Wünschenswert sind beispielsweise 256 Helligkeitsstufen, wofür bei dieser ersten Möglichkeit auch 256 Helligkeitsstufen der Laserdiode einstellbar sein müssten, was jedoch in der Praxis aufgrund des steuerungstechnischen Aufwandes, der mit steigender Zahl von möglichen Helligkeitsstufen der Laserdiode einhergeht und aufgrund steigender Verlustleistungen und letztlich auch bedeutsamen Problemen der elektromagnetischen Abschirmung entsprechender Schaltungen nicht tunlich ist. Dies kann gemäß der zweiten Möglichkeit bereits mit zwei Helligkeitsstufen der Laserdiode bewerkstelligt werden, sofern es gelingt, die relative Beleuchtungsdauer des Lichtkonversionselements durch den Laserstrahl in den unterschiedlichen Bereichen bzw. Pixeln des Lichtkonversionselements in bspw. 256 Abstufungen einzustellen. Dies kann einerseits durch Lichtpulse der Laserdiode beim Überstreichen des Pixels geschehen, sodass das Pixel bspw. nur die Hälfte der Zeit bestrahlt wird (resultierend zu 50% Leuchtintensität vom menschlichen Auge wahrnehmbar) oder die Abtastperiode des Laserstrahls wird klein genug, d.h. die Abtastfrequenz des Laserstahls wird hoch genug gewählt, um aufgrund der Vielzahl an Wiederholungen des Überstreichens die unterschiedliche relative Bestrahldauer in den einzelnen Pixeln einstellen zu können. Die genannte Vielzahl an Wiederholungen des Überstreichens bzw. die genannte hohe Abtastfrequenz bezieht sich auf eine Minimalfrequenz bzw. Grundperiode des Lichtbildaufbaus, die auch für Pixel mit der geringsten Helligkeitsstufe, die sich dann ergibt, wenn das entsprechende Pixel auch bei einer vielfachen Abtastfrequenz des Laserstrahles für andere Pixel mit nur einem Lichtpuls bestrahlt wird, sichergestellt sein muss, um ein für das menschliche Auge gleichmäßiges, flackerfreies Lichtbild zu gewährleisten. Beispielsweise ist eine solche Grundperiode 1/200 Sekunde, in diesem Fall ist die Minimalfrequenz 200 Hz (Hertz). Eine Verdopplung der Abtastfrequenz bedeutet in diesem Fall, dass sämtliche Pixel mit einer Frequenz von 400 Hz bestrahlbar sind, d.h. der Laserstrahl kann innerhalb der Grundperiode von 1/200 sek. jedes Pixel zweimal überstreichen. Wird das Pixel auch zweimal beleuchtet, resultieren 100% Helligkeit, wird das Pixel nur einmal beleuchtet, resultieren 50% Helligkeit. Mit anderen Worten sind also neben der Möglichkeit das Pixel auch gar nicht zu beleuchten (das Pixel bleibt dunkel), zwei Stufen relativer Beleuchtungsdauer möglich.

Zur Erzielung der genannten hohen Anzahl von Helligkeitsstufen haben beide Verfahren ihre Grenzen, da es zum einen beim Dimmen einer Laserdiode, d.h. beim Einstellen einer Mehrzahl unterschiedlicher Lichtleistungen zu relativ hohen Verlustleistungen und damit zu großer Wärmeentwicklung kommt, wie dies bereits weiter oben dargelegt wurde. Zum anderen ist es aber nicht möglich, Laserpulse ausreichend kurz und genau zu erzeugen, um die genannte hohe Anzahl an Helligkeitsstufen ausschließlich auf Basis der relativen Beleuchtungsdauer zu erzielen. Des Weiteren kann auch das Wiederholen des Überstreichens in einer Periode nicht unbeschränkt vervielfacht werden, da hier die Umlenksysteme, in der Regel die bereits genannten oszillierenden Spiegel an ihre mechanischen Grenzen gelangen würden.

Es ist daher Aufgabe der vorliegenden Erfindung, ein Verfahren der eingangs genannten Art dahingehend weiterzuentwickeln, um eine hohe Anzahl von Helligkeitsstufen bei einem Kraftfahrzeugscheinwerfer mit einem System aus Laserdiode und Lichtkonversionselement im Lichtbild darstellen zu können.

Zur Lösung dieser Aufgabe ist das erfindungsgemäße Verfahren ausgehend von einem Verfahren der eingangs genannten Art dahingehend weitergebildet, dass die Beleuchtungsintensität in den den unterschiedlichen Bereichen des Lichtbilds entsprechenden Bereichen des Lichtkonversionselements gleichzeitig sowohl durch die relative Beleuchtungsdauer der unterschiedlichen Bereiche als auch durch unterschiedliche Lichtstärken der Laserdiode in den den unterschiedlichen Bereichen des Lichtbilds entsprechenden Bereichen des Lichtkonversionselements eingestellt wird. Zur Erzielung einer großen Anzahl von Helligkeitsstufen werden gemäß der vorliegenden Erfindung die Effekte der Steuerung der Beleuchtungsintensität durch Steuerung der relativen Beleuchtungsdauer mit jenen der Steuerung der Beleuchtungsintensität durch Steuerung der Lichtstärken der Laserdiode kombiniert. Jede Halbierung der Abtastperiode führt zu einer Verdoppelung der Helligkeitsstufen, die allein durch die erzielbare unterschiedliche relative Beleuchtungsdauer der den unterschiedlichen Bereichen des Lichtbilds entsprechenden Bereichen des Lichtkonversionselements dargestellt werden können, genauso wie jede Verdoppelung der Anzahl der einstellbaren Lichtstärken der Laserdiode zu einer solchen Verdoppelung der erzielbaren Helligkeitsstufen führt. Auf diese Weise können die Nachteile der beiden genannten Arten der Erzeugung unterschiedlicher Helligkeitsstufen gering gehalten werden. In Tabelle 1 ist gezeigt, wie jede Verdoppelung der Abtastfrequenz bezogen auf die Grundperiode eine Verdoppelung der darstellbaren Helligkeitsstufen mit sich bringt.

**Tabelle. 1**

| Grundperiode | Abtastfrequenz | Helligkeitsauflösung |
|---|---|---|
| 200 Hz | 400 Hz | 2 |
| | 800 Hz | 4 |
| | 1600 Hz | 8 |
| | 3200 Hz | 16 |
| | 6400 Hz | 32 |
| | 12800 Hz | 64 |
| | 25600 Hz | 128 |

Prinzipiell kann der Lichtstrahl der Laserdiode entlang jedes beliebigen Musters über das Lichtkonversionselement geführt werden. Gemäß einer bevorzugten Variante der vorliegenden Erfindung wird jedoch so vorgegangen, dass das Lichtkonversionselement von dem Lichtstrahl der Laserdiode entlang von Zeilen und/oder Spalten beleuchtet wird, wodurch eine effiziente Lichtführung erreicht wird, die möglichst hohe Abtastgeschwindigkeiten gestattet.

Bevorzugt wird der Lichtstrahl entlang der Zeilen und/oder Spalten hin und her bewegt, sodass kein Leerlauf des Umlenkspiegels nötig ist, um nach Durchlaufen einer Periode wieder an den Ausgangspunkt zurückzukehren. Bei einem Hin- und Herbewegen des Lichtstrahls werden die randständigen Pixel beim Umkehren des Lichtstrahls unter Umständen sehr kurz hintereinander beleuchtet, dafür in der Folge nur mit großem zeitlichen Abstand, bis der Lichtstrahl zum anderen Rand und wieder zurück gelaufen ist. Um diesem Umstand Rechnung zu tragen und um Extremfälle zu vermeiden, kann es daher bevorzugt vorgesehen sein, dass zur Erzielung der relativen Beleuchtungsdauer erforderliche Lichtpulse in einem Pixel nicht aufeinanderfolgend sondern über eine Grundperiode verteilt ausgesendet werden.

Bevorzugt wird so vorgegangen, dass der Lichtstrahl der Laserdiode mittels eines beweglichen Umlenkspiegels auf das Lichtkonversionselement gelenkt wird, obwohl auch jede andere Form der Umlenkung des Lichtstrahls der Laserdiode wie bspw. mit Hilfe von beweglichen Prismen denkbar ist.

Insbesondere ist der Umlenkspiegel Teil eines MEMS-Mikroscanners, wie dies einer bevorzugten Ausführungsform der vorliegenden Erfindung entspricht. MEMS-Mikoscanner zeichnen sich durch die präzise Realisierbarkeit hoher Abtastfrequenzen aus, was im Zusammenhang mit der vorliegenden Erfindung vorteilhaft zur Erzielung einer Vielzahl von Helligkeitsstufen ist.

Alternativ kann der Umlenkspiegel jedoch elektromagnetisch angetrieben werden, wie dies einer bevorzugten Ausführungsform der vorliegenden Erfindung entspricht.

Gemäß einer bevorzugten Ausführungsform der vorliegenden Erfindung sind an der Laserdiode zumindest drei Lichtstärken, insbesondere 100%, 50% und 0% der maximalen Lichtstärke der Laserdiode einstellbar.

Der erfindungsgemäße Kraftfahrzeugscheinwerfer zeichnet sich ausgehend von einem Kraftfahrzeugscheinwerfer der eingangs genannten Art dadurch aus, dass die Recheneinheit zur Durchführung des soeben geschilderten Verfahrens eingerichtet ist.

Das erfindungsgemäße Verfahren wird anhand der Figuren in der Zeichnung erläutert. In dieser zeigen
Fig. 1 die wesentlichen Komponenten eines Kraftfahrzeugscheinwerfers zur Anwendung des erfindungsgemäßen Verfahrens,
Fig. 2 eine Veranschaulichung eines nicht erfindungsgemäßen Verfahrens zur Steuerung eines Kraftfahrzeugscheinwerfers, bei dem die Beleuchtungsintensität durch wechselnde Lichtstärke der Laserdiode eingestellt wird,
Fig. 3a - 3c Veranschaulichungen von nicht erfindungsgemäßen Verfahren, bei denen die Beleuchtungsintensität durch die relative Beleuchtungsdauer der unterschiedlichen Bereiche pro Periode eingestellt wird,
Fig. 4 das Ergebnis im Lichtbild bei Durchführung des Steuerungsverfahrens gemäß Fig. 3c
Fig. 5 eine Darstellung des erfindungsgemäßen Verfahrens.

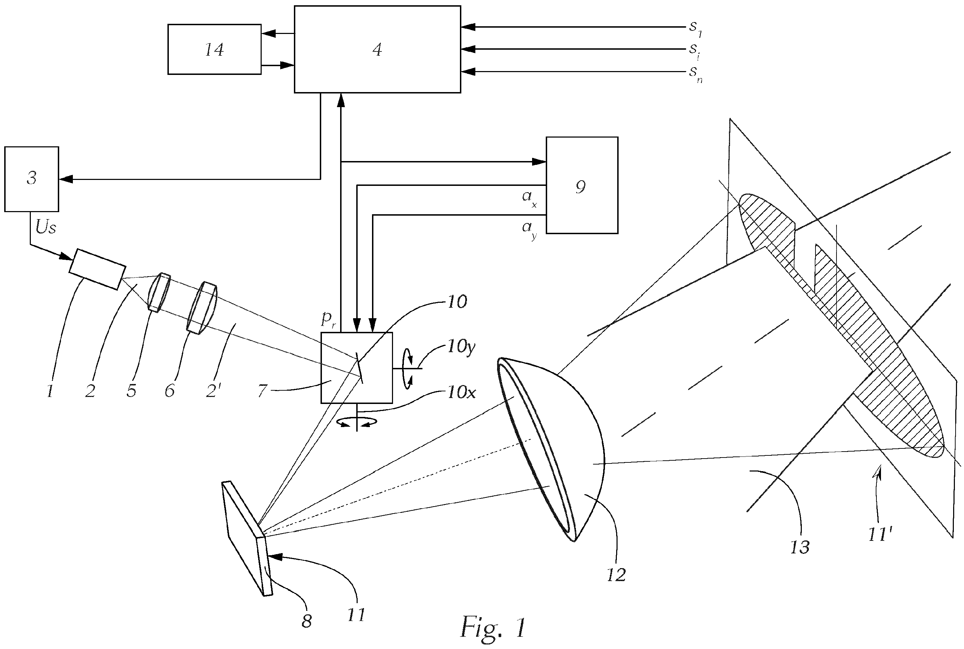

Unter Bezugnahme auf Fig. 1 wird nun ein Ausführungsbeispiel der Erfindung näher erläutert. Insbesondere sind die für einen erfindungsgemäßen Scheinwerfer wichtigen Teile dargestellt, wobei es klar ist, dass ein KFZ-Scheinwerfer noch viele andere Teile enthält, die seinen sinnvollen Einsatz in einem Kraftfahrzeug, wie insbesondere einem PKW oder Motorrad, ermöglichen. Lichttechnischer Ausgangspunkt des Scheinwerfers ist eine Laserdiode 1, die einen Laserstrahl 2 abgibt, und welcher eine Laseransteuerung 3 zugeordnet ist, wobei diese Ansteuerung 3 zur Stromversorgung sowie zur Überwachung der Laseremission oder z.B. zur Temperaturkontrolle dient und auch zum Modulieren der Intensität des abgestrahlten Laserstrahls eingerichtet ist. Unter "Modulieren" wird in Zusammenhang mit der vorliegenden Erfindung verstanden, dass die Intensität der Laserdiode geändert werden kann, sei es kontinuierlich oder gepulst, im Sinne eines Ein- und Ausschaltens. Wesentlich ist, dass die Lichtleistung geändert werden kann, je nachdem, an welcher Winkelposition ein später näher beschriebener Spiegel steht. Zusätzlich gibt es noch die Möglichkeit des Ein- und Ausschaltens für eine gewisse Zeit. Ein Beispiel eines dynamischen Ansteuerungskonzepts zur Erzeugung eines Bildes durch einen scannenden Laserstrahl ist etwa in dem Dokument AT 514633 der Anmelderin beschrieben. Das Ansteuersignal der Laserdiode 1 ist mit Us bezeichnet.

Die Laseransteuerung 3 erhält ihrerseits wiederum Signale von einer zentralen Recheneinheit 4, welcher Sensorsignale s1, si, sn zugeführt werden können. Diese Signale können einerseits beispielsweise Schaltbefehle zum Umschalten von Fernlicht auf Abblendlicht sein oder andererseits Signale, die beispielsweise von Sensoren S1...Sn, wie Kameras, aufgenommen werden, welche die Beleuchtungsverhältnisse, Umweltbedingungen und/oder Objekte auf der Fahrbahn erfassen. Auch können die Signale von einer Fahrzeug-Fahrzeug-Kommunikationsinformation stammen. Die hier schematisch als Block gezeichnete Recheneinheit 4 kann vollständig oder teilweise in dem Scheinwerfer enthalten sein und dient insbesondere auch zur Durchführung des weiter unten beschriebenen Verfahrens der Erfindung.

Die Laserdiode 1 gibt beispielsweise blaues oder UV-Licht ab, wobei der Laserdiode eine Kollimatoroptik 5 sowie eine Fokussieroptik 6 nachgeordnet ist. Die Ausbildung der Optik hängt unter anderem von der Art, Anzahl und der räumlichen Platzierung der verwendeten Laserdioden, von der erforderlichen Strahlqualität und von der gewünschten Laserspotgröße am Lichtkonversionselement ab.

Der fokussierte bzw. geformte Laserstrahl 2' gelangt zu einem Lichtscanner 7 und wird von einem Umlenkspiegel 10 auf ein im vorliegenden Beispiel als Leuchtfläche ausgebildetes Lichtkonversionselement 8 reflektiert, welches z.B. in bekannter Weise einen Phosphor zur Lichtkonversion aufweist. Der Phosphor wandelt beispielsweise blaues oder UV-Licht in "weißes" Licht um. Unter "Phosphor" wird in Zusammenhang mit der vorliegenden Erfindung ganz allgemein ein Stoff oder eine Stoffmischung verstanden, welche Licht einer Wellenlänge in Licht einer anderen Wellenlänge oder eines Wellenlängengemisches, insbesondere in "weißes" Licht, umwandelt, was unter dem Begriff "Wellenlängenkonversion" subsumierbar ist.

Man verwendet Lumineszenz-Farbstoffe, wobei die Ausgangswellenlänge im Allgemeinen kürzer und damit energiereicher als das emittierte Wellenlängengemisch ist. Der gewünschte Weißlichteindruck entsteht dabei durch additive Farbmischung. Dabei wird unter "weißes Licht" Licht einer solchen Spektralzusammensetzung verstanden, welches beim Menschen den Farbeindruck "weiß" hervorruft. Der Begriff "Licht" ist natürlich nicht auf für das menschliche Auge sichtbare Strahlung eingeschränkt. Für das Lichtkonversionselement kommen beispielsweise Optokeramiken in Frage, das sind transparente Keramiken, wie beispielsweise YAG:Ce (ein Yttrium-Aluminium-Granat mit Cer dotiert).

Angemerkt sei an dieser Stelle, dass in der Zeichnung das Lichtkonversionselement 8 als Phosphorfläche gezeigt ist, auf welcher der scannende Laserstrahl 2 bzw. scannende Laserstrahlen ein Bild erzeugen, das von dieser Seite des Phosphors ausgehend projiziert wird. Es ist jedoch auch möglich, einen durchscheinenden Phosphor zu verwenden, bei welchem der Laserstrahl 2, von der der Projektionslinse abgewandten Seite kommend, ein Bild erzeugt, wobei sich jedoch die Abstrahlseite auf der der Projektionslinse zugewandten Seite des Lichtkonversionselements befindet. Es sind somit sowohl reflektierende als auch transmissive Strahlengänge möglich, wobei letztlich auch eine Mischung von reflektierenden und transmissiven Strahlengängen nicht ausgeschlossen ist.

Der im vorliegenden Beispiel um zwei Achsen schwingende Umlenkspiegel 10 wird von einer Spiegelansteuerung 9 mit Hilfe von Treibersignalen ax, ay angesteuert und z.B. in zwei zueinander orthogonalen Richtungen x, y abgelenkt. Auch die Spiegelansteuerung 9 wird von der Recheneinheit 4 gesteuert, um die Schwingungsamplituden des Umlenkspiegels 10 sowie dessen momentane Winkelgeschwindigkeit einstellen zu können, wobei auch asymmetrisches Schwingen um die jeweilige Achse einstellbar sein kann. Die Ansteuerung von Umlenkspiegeln ist bekannt und kann auf vielerlei Art erfolgen, z.B. elektrostatisch oder elektrodynamisch. Bei erprobten Ausführungsformen der Erfindung verschwenkt der Umlenkspiegel 10 in x-Richtung um eine erste Drehachse 10x und in y-Richtung um eine zweite Drehachse 10y und sein maximaler Ausschlag führt in Abhängigkeit von seiner Ansteuerung zu Auslenkungen in dem resultierenden Leuchtbild von beispielsweise +/- 35° in x-Richtung und -12° bis +6° in y-Richtung, wobei die Spiegelauslenkungen die Hälften dieser Werte betragen.

Die Position des Umlenkspiegels 10 wird zweckmäßigerweise mit Hilfe eines Positionssignals pr an die Spiegelansteuerung 9 und/oder an die Recheneinheit 4 rückgemeldet. Es sei angemerkt, dass auch andere Strahlablenkmittel, wie z.B. bewegbare Prismen, Verwendung finden können, wenngleich die Verwendung eines Umlenkspiegels bevorzugt wird.

Der Laserstrahl 6 scannt somit über das Lichtkonversionselement 8, das im Allgemeinen eben ist, jedoch nicht eben sein muss, und erzeugt ein Leuchtbild 11 mit einer vorgegebenen Lichtverteilung. Dieses Leuchtbild 11 wird nun mit einem Abbildungssystem 12 als Lichtbild 11' auf die Fahrbahn 13 projiziert. Dabei wird die Laserdiode mit hoher Frequenz gepulst oder kontinuierlich angesteuert, sodass entsprechend der Position des Umlenkspiegels 10 beliebige Lichtverteilungen nicht nur einstellbar sind - beispielsweise Fernlicht/Abblendlicht - sondern auch rasch änderbar sind, wenn dies eine besondere Gelände- oder Fahrbahnsituation erfordert, beispielsweise wenn Fußgänger oder entgegenkommende Fahrzeuge durch einen oder mehrere der Sensoren S1...Sn erfasst werden und dementsprechend eine Änderung der Geometrie und/oder Intensität des Lichtbildes 11' der Fahrbahnausleuchtung erwünscht ist. Das Abbildungssystem 12 ist hier vereinfacht als Linse dargestellt.

Der Begriff "Fahrbahn" wird hier zur vereinfachten Darstellung verwendet, denn selbstverständlich hängt es von den örtlichen Gegebenheiten ab, ob sich das Lichtbild 11' tatsächlich auf der Fahrbahn befindet oder auch darüber hinaus erstreckt. Prinzipiell entspricht das Bild 11' einer Projektion auf eine vertikale Fläche entsprechend der einschlägigen Normen, die sich auf die KFZ-Beleuchtungstechnik beziehen.

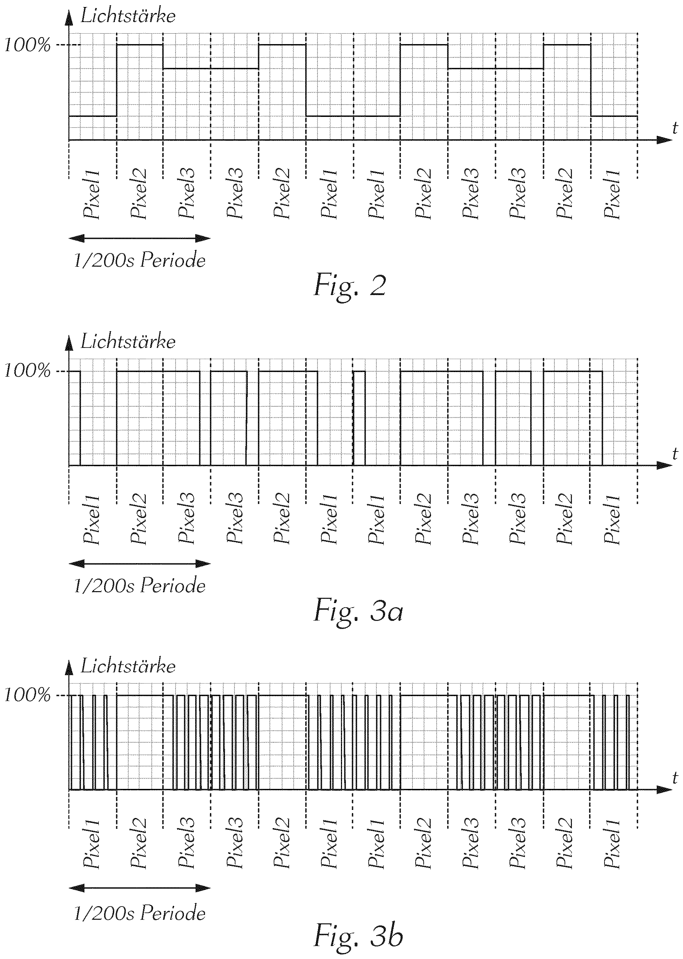

In Fig. 2 und weiteren Figuren ist nun das Beleuchtungsschema auf dem Lichtkonversionselement 8 vereinfacht für lediglich drei Pixel dargestellt. In Fig. 2 werden die den unterschiedlichen Bereichen des Lichtbilds entsprechenden unterschiedlichen Bereiche bzw. Pixel des Lichtkonversionselements 8 periodisch mit einer Periodendauer von 1/200 sek. gescannt, wobei die Laserdiode hinsichtlich ihrer Lichtstärke in den unterschiedlichen Pixeln, d.h. innerhalb der Periode von 1/200 sek. unterschiedlich eingestellt wird, d.h. die Beleuchtungsintensität in den unterschiedlichen Bereichen wird durch wechselnde Lichtstärke ingestellt. Im in Fig. 2 gezeigten Beispiel werden in Pixel 1 eine Lichtstärke von 25% der maximalen Lichtstärke der Laserdiode 1, in Pixel 2 eine Lichtstärke von 100% der maximalen Lichtstärke der Laserdiode 1 und in Pixel 3 eine Lichtstärke von 75% der maximalen Lichtstärke der Laserdiode 1 eingestellt, welche Einstellungen auch beim mehrmaligen, in diesem Beispiel viermaligen Scannen des Lichtkonversionselement 8 beibehalten bleiben. Insgesamt resultiert daraus in Pixel 1 25% Helligkeit, in Pixel 2,100% Helligkeit und in Pixel 3 75% Helligkeit.

In den Figuren 3a bis 3c sind verschiedene Möglichkeiten dargestellt, die Beleuchtungsintensität durch die relative Beleuchtungsdauer der unterschiedlichen Bereiche einzustellen. In Fig. 3a werden die den unterschiedlichen Bereichen des Lichtbilds entsprechenden unterschiedlichen Bereiche bzw. Pixel des Lichtkonversionselements 8 periodisch ebenfalls mit einer Periodendauer von 1/200 sek. gescannt, wobei die Laserdiode hinsichtlich ihrer Lichtstärke nur zwischen 0% und 100% der maximalen Lichtstärke der Laserdiode eingestellt wird. Um eine dem Beispiel aus Fig. 2 entsprechende Beleuchtungsintensität zu erreichen, wird jedoch Pixel 1 nur in 25% der Zeit bestrahlt, in der der Laserstrahl Pixel 1 durchläuft. Pixel 2 wird während 100% der Durchlaufzeit und Pixel 3 während 75% der Durchlaufzeit bestrahlt. Zu erkennen ist dies in Fig. 3a daran, dass die Lichtstärke nach 25% des Durchlaufs von Pixel 1 auf 0% der maximalen Lichtstärke der Laserdiode 1 abfällt, beim Durchlauf von Pixel 2 bei 100% % der maximalen Lichtstärke der Laserdiode 1 verbleibt und beim Durchlauf von Pixel 3 nach 75% des Durchlaufs auf 0% der maximalen Lichtstärke der Laserdiode 1 abfällt. Für das menschliche Auge resultieren daher in den einzelnen Pixeln relative Helligkeitseindrücke, die den genannten relativen Bestrahlzeiten entsprechen. Ein solches Verfahren wird als Pulsweitenmodulation bezeichnet.

In Fig. 3b werden die Pixel ebenfalls im Ausmaß der relativen Bestrahlzeiten wie im Beispiel der Fig. 3a bestrahlt, jedoch erfolgt das Bestrahlen hier als vierfache Pulsweitenmodulation, was zu einem homogeneren Lichtbild führt. Eine Periode, in der alle Pixel durchlaufen werden, misst wiederum 1/200 sek., wobei 4 identische Durchläufe dargestellt sind. Für das menschliche Auge resultieren daher in den einzelnen Pixeln wiederum Helligkeitseindrücke, die den genannten relativen Bestrahlzeiten entsprechen.

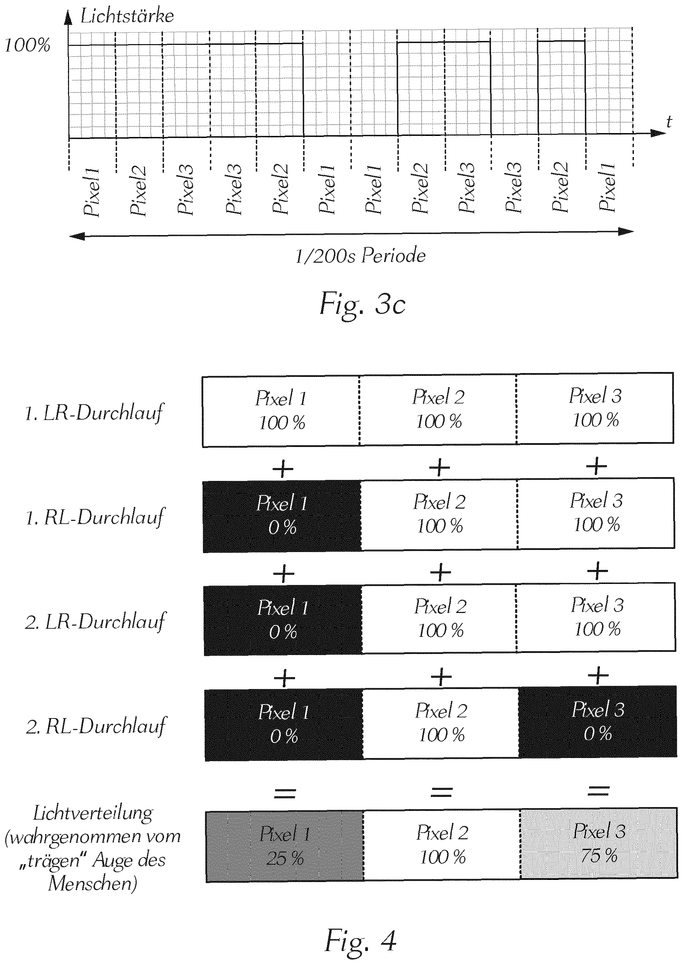

In den Figuren 3a und 3b sind Pulsweitenmodulationsverfahren gezeigt, bei denen die Pulsweitenmodulation in den einzelnen Pixeln jeweils gleichartig durchgeführt wird. Eine Abkehr von diesem Prinzip, gemäß dem in den einzelnen Pixeln bei jedem Durchlauf des Laaserstrahls die gleiche Beleuchtungsintensität eingestellt wird, ist in Fig. 3c gezeigt. In Fig. 3c werden die Pixel des Lichtkonversionselements 8 in der Dauer von 1/200 sek. vier Mal, d.h. mit der vierfachen Abtastfrequenz durchlaufen, wobei Pixel 1 lediglich im ersten Durchlauf, Pixel 2 in allen vier Durchläufen und Pixel 3 in drei Durchläufen mit der vollen Leistung bestrahlt werden. Es resultiert wiederum eine relative Bestrahlungsintensität wie in den Beispielen gemäß den Figuren 3 a und 3b, wobei die Lichtpulse langsamer getaktet werden können, und durch das viermalige Überscannen des Lichtkonversionselement 8 die relative Bestrahldauer einstellbar ist.

Die Bestrahlabfolge der Figur 3c ist in anderer Form in Fig. 4 dargestellt.

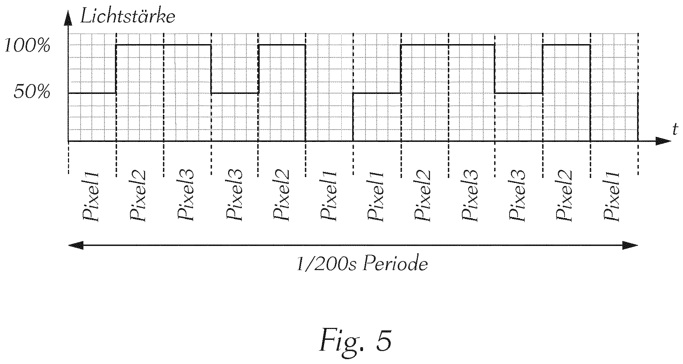

In Fig. 5 wird erfindungsgemäß die Beleuchtungsintensität in den den unterschiedlichen Bereichen des Lichtbilds entsprechenden Bereichen des Lichtkonversionselements 8 sowohl durch die relative Beleuchtungsdauer der unterschiedlichen Bereiche als auch durch wechselnde Lichtstärke der Laserdiode eingestellt. Die Einstellung der relativen Beleuchtungsdauer erfolgt nach dem Verfahren, das im Zusammenhang mit Fig. 3c erläutert wurde, wobei die Laserdiode 1 nicht nur ein- und ausgeschaltet werden kann, sondern zusätzlich 50% % der maximalen Lichtstärke der Laserdiode 1 einstellbar sind. Diese zusätzliche Stufe der Lichtstärke gestattet eine Halbierung der Abtastfrequenz bei gleichbleibend großer Anzahl von darstellbaren Helligkeitsstufen.

## Patentansprüche

1. Verfahren zur Steuerung eines Kraftfahrzeugscheinwerfers, der Kraftfahrzeugscheinwerfer mindestens umfassend eine Laserdiode (1) und ein der Laserdiode (1) zugeordnetes Lichtkonversionselement (8), wobei unterschiedlichen Bereichen des Lichtbilds (11') entsprechende Bereiche des Lichtkonversionselements (8) von einem Lichtstrahl (2) der Laserdiode (1) periodisch und mit unterschiedlicher Intensität beleuchtbar sind, **dadurch gekennzeichnet, dass** die Beleuchtungsintensität in den den unterschiedlichen Bereichen des Lichtbilds (11') entsprechenden Bereichen des Lichtkonversionselements (8) gleichzeitig sowohl durch die relative Beleuchtungsdauer der unterschiedlichen Bereiche als auch durch unterschiedliche Lichtstärken der Laserdiode (1) in den den unterschiedlichen Bereichen des Lichtbilds (11') entsprechenden Bereichen des Lichtkonversionselements (8) eingestellt wird.

2. Verfahren nach Anspruch 1, **dadurch gekennzeichnet, dass** das Lichtkonversionselement (8) von dem Lichtstrahl (2) der Laserdiode (1) entlang von Zeilen und/oder Spalten beleuchtet wird.

3. Verfahren nach Anspruch 2, **dadurch gekennzeichnet, dass** der Lichtstrahl (2) entlang der Zeilen und/oder Spalten hin und her bewegt wird.

4. Verfahren nach Anspruch 3, **dadurch gekennzeichnet, dass** zur Erzielung der relativen Beleuchtungsdauer erforderliche Lichtpulse in den unterschiedlichen Bereichen des Lichtbilds (11') entsprechenden Bereichen des Lichtkonversionselements (8) über eine Grundperiode verteilt ausgesendet werden.

5. Verfahren nach einem der Ansprüche 1 bis 4, **dadurch gekennzeichnet, dass** der Lichtstrahl (2) der Laserdiode (1) mittels eines beweglichen Umlenkspiegels (10) auf das Lichtkonversionselement (8) gelenkt wird.

6. Verfahren nach Anspruch 5, **dadurch gekennzeichnet, dass** der Umlenkspiegel (10) Teil eines MEMS-Mikroscanners ist.

7. Verfahren nach Anspruch 5, **dadurch gekennzeichnet, dass** der Umlenkspiegel (10) elektromagnetisch angetrieben wird.

8. Verfahren nach einem der Ansprüche 1 bis 7, **dadurch gekennzeichnet, dass** an der Laserdiode (1) zumindest drei unterschiedliche Lichtstärken, insbesondere 100%, 50% und 0% der maximalen Lichtstärke der Laserdiode (1) einstellbar sind.

9. Kraftfahrzeugscheinwerfer mit mindestens einer hinsichtlich ihrer Lichtstärke einstellbaren Laserdiode (1), deren Laserstrahl (2) scannend auf ein Lichtkonversionselement (8) lenkbar ist, um an diesem ein Leuchtbild (7) zu erzeugen, welches über ein Abbildungssystem (12) als Lichtbild (11') auf die Fahrbahn projiziert wird, und ein Umlenkspiegel (10) des Lichtscanners entsprechend festgelegter Steuerkennlinien in zumindest einer Koordinatenrichtung verschwenkbar ist, sowie mit einer Laseransteuerung (3) und einer dieser zugeordneten Recheneinheit (4), **dadurch gekennzeichnet, dass** die Recheneinheit (4) zur Durchführung des Verfahrens nach einem oder mehreren der vorgehenden Ansprüche eingerichtet ist.
